# EUROPEAN PATENT APPLICATION

(11) **EP 4 759 533 A1**
(43) Date of publication of application: **17.06.2026**
(21) Application number: 25223117.0
(22) Date of filing: 12.12.2025
(51) Int. Cl.: B31B 50/16, B31B 50/00, B31B 50/10, B31B 50/14, B31B 50/25, B32B 3/26, B32B 29/00, B65B 41/18, B32B 5/02, B32B 5/26, B31B 100/00, B31B 110/35

(54) **WEB OF MULTILAYER PACKAGING MATERIAL, BLANK AND METHOD**

(30) Priority: 12.12.2024 EP 24219295
(71) Applicant: Tetra Laval Holdings & Finance S.A., 1009 Pully (CH)
(72) Inventor: Ahlberg, Jimmy, 221 86 Lund (SE); Danielsson, Anders, 221 86 Lund (SE); Lindén, Staffan, 221 86 Lund (SE)
(74) Representative: Tetra Pak Patent Attorneys

(57) **Abstract**

A web (10) of a multilayer packaging material (12) that comprises a layer of fibrous material (14), wherein the web (10) comprises a plurality of repeat units (16, 16') successively arranged and continuously connected to each other in a first direction (18), each of the repeat units comprising a plurality of holes (20a-h) through the multilayer packaging material, wherein each of the holes has a base (22a-h), the holes being arranged such that the bases are mutually aligned and extend along a common a line (23), the line extending substantially in a second direction (24) perpendicular to the first direction, the line comprising line segments (26b-h) that extend between a respective pair of the bases (22a-h) to delimit the repeat unit (16) from a successive repeat unit (16'), and wherein, for each repeat unit, the web has at least one cut-out (28-1, 28-2, 28-3, 28-4, 28-4', 28-4", 28-5, 28-6) through the multilayer packaging material, each of the cut-out(s) being provided at a respective line segment (26c, 26g) of said line segments.

## Description

### Technical Field

The invention relates to a web of a multilayer packaging material that comprises a layer of fibrous material, wherein the web comprises a plurality of successively arranged and continuously connected repeat units. The invention also relates to a blank made from such a web. The invention also relates to a method for production of such a web, and to a method of using such a web.

### Background

WO2023285258A1 discloses a package for holding a food product, the package comprising a base, a sidewall, a shoulder, a neck and a closure for forming a sealed, inner space for the food product, the base and the sidewall being formed from a multilayer packaging material that comprises a layer of fibrous material, wherein the shoulder comprises a plurality of flap sections that are formed from a multilayer packaging material, extend from the sidewall and are folded towards each other in a direction towards the neck, with each flap section having lateral edges facing lateral edges of neighbouring flap sections, and a plurality of molded seams that join the lateral edges of neighbouring flap sections.

WO2023285258A1 further discloses a method for packaging a food product into the package, the method comprising: providing (a) a blank of a multilayer packaging material having a main portion and a plurality of flap sections that extend from the main portion, folding and longitudinally sealing (b) the blank so as to form the sidewall, folding (c) the flap sections towards each other so that lateral edges of neighbouring flap sections face each other, injection molding (d) the neck and the molded seam portions to join the lateral edges of neighbouring flap sections so as to form the shoulder, filling (e) a food product into the package at a bottom end of the package, and sealing (f) the bottom end to form the base. The blank may comprise a plurality of crease lines. The crease lines may partially define the shape of a main body of the package. Moreover, each blank may be obtained from cutting a web of the multilayer packaging material. The web may comprise a plurality of successively arranged and continuously connected repeat units. The web may be cut in correspondence of the repeat units so as to form the blanks.

The placement of the crease lines, in particular crease lines used when folding the blank so as to form the sidewall, as well as the repeat length of the blanks should be accurate when producing a package of the type disclosed in WO2023285258A1, in particular to achieve a correct injection molding of the neck and/or the molded seam portions. In other words, if the crease line placement and/or the repeat length is inaccurate, the injection molding may be incorrect, risking integrity issues in the produced package.

### Summary

It is an object of the invention to at least partly overcome one or more of the above-identified limitations. In particular, it is an object to allow accurate crease line placement and/or repeat length.

To solve these objects, according to a first aspect, a web of a multilayer packaging material that comprises a layer of fibrous material is provided. The web comprises a plurality of repeat units successively arranged and continuously connected to each other in a first direction, each of the repeat units comprising a plurality of holes through the multilayer packaging material, wherein each of the holes has a base, the holes being arranged such that the bases are mutually aligned and extend along a common line, the line extending (substantially) in a second direction perpendicular to the first direction, the line comprising line segments that extend between a respective pair of the bases to delimit the repeat unit from a successive repeat unit, and wherein, for each repeat unit, the web has at least one cut-out through the multilayer packaging material, each of the at least one cut-out being provided at a respective line segment of said line segments.

The web is typically utilized by a packaging machine that cuts the web into individual repeat units, which are then formed into packages and filled with a food product. The cutting is done along the common line, specifically over the line segments that delimit each repeat unit.

The web is advantageous in that the cut-outs readily can be detected by, for example, an optical sensor in the packaging machine, to auto adjust a machine crease in a creaser unit and/or the repeat length in a cutting unit that are part of the packaging machine. This in turn may secure the correct overmould (as in step (d) in WO2023285258A1), eliminating or at least reducing the risk of integrity issues in the eventual package.

A line extending "substantially" in a second direction may be construed as the line may overall extend in the second direction, although the line does not necessarily have to be straight, but could be slightly curved and/or have slightly offset portions.

Each cut-out may be provided on the respective line segment, such that the cut-out is positioned in both the repeat unit (in which the plurality of holes is provided) and the successive repeat unit. In this way, a cut-out may be placed in both the top and the bottom of a blank corresponding to a repeat unit of the web. This reduces the risk of a thin bridge of packaging material being formed between two neighboring holes, for example, in cases where a cutting operation in the packaging machine is slightly offset in the first direction (away from the holes).

The cut-out may be centered or offset with respect to the line segment in the first direction. When the cut-out is offset, for instance, toward the repeat unit in which the holes are arranged, the risk of creating thin bridges is reduced, while still minimizing the amount of material removed from a bottom part of the neighboring repeat unit.

Each cut-out may border the respective line segment, such that the cut-out is positioned exclusively in the repeat unit (in which the plurality of holes is provided). That is, a cut-out may here be placed only in the top of a blank corresponding to a repeat unit of the web. An advantage of this is that the cut-out can be used after a package is made from the blank for quality control. Specifically, the cut-out can be visually inspected by an operator, to confirm that a crease line in the multilayer packaging material and/or a transversal cut to form the blank have been placed correctly. Another advantage is that the cut-out does not remove any material from the bottom of the blank/package.

Each cut-out may border the respective line segment, such that the cut-out is positioned exclusively in the successive repeat unit. That is, a cut-out may here be placed only in the bottom of a blank corresponding to a repeat unit of the web. An advantage of this is that the cut-out may not be visual on a package made from the blank.

Each cut-out may be centered with respect to the respective line segment in the second direction. An advantage of this is that it may facilitate the visual inspection, since the crease line typically also should be centered. As used herein, a cut-out is "centered" with respect to the line segment if its geometric centre lies along the midpoint of the line segment in the second direction. This means the cut-out may be symmetrically positioned such that it is equidistant from both ends of the line segment in the second direction. Alternatively, each cut-out may be non-centered with respect to the respective line segment in the second direction by a known offset distance, which would still allow the cut-outs to be detected by an optical sensor to auto adjust the machine crease.

The at least one cut-out for one of the repeat units may be aligned with the at least one cut-out for the other repeat units of the web in the second direction. This may facilitate and/or speed up detection of the cut-outs in a machine by an optical sensor.

Each cut-out may have at least one corner positioned on the respective line segment. This at least one corner may align with the transversal cut to form the bank.

Each cut-out may have at least one of: at least one straight side extending in the first direction, and at least one straight side extending in the second direction. The at least one straight side extending in the first direction may be useful for detection by an optical sensor to auto adjust the machine crease. The at least one straight side extending in the second direction may be useful for detection by an optical sensor to auto adjust the repeat length/transversal cut.

Each cut-out may be diamond-shaped, triangular-shaped, square-shaped, or rectangular-shaped. Other possible shapes may include half-circular, T-shaped, cross-shaped, etc.

According to a second aspect, a blank made from the web according to the first aspect is provided, wherein the blank corresponds to one of the repeat units of the web.

According to a third aspect, a method for production of a web according to the first aspect is provided, wherein the method comprises: providing a multilayer packaging material that comprises a layer of fibrous material; providing the plurality of holes of a repeat unit through the multilayer packaging material; and in the same operation as providing the plurality of holes, providing the at least one cut-out through the multilayer packaging material. Providing the at least one cut-out in the same operation as the holes may ensure very good accuracy. Moreover, the latter two steps may be repeated for every repeat unit of the web.

Said holes and said at least one cut-out may be provided using different parts of a die cutting tool in a machine, for example different blades on a cylindrical die in a rotary die cutting machine. The machine here could alternatively be a flatbed die cutting machine.

According to a further aspect, a method of using a web according to the first aspect is provided, wherein the method comprises: detecting the at least one cut-out by at least one sensor, to set, adjust, and/or confirm the position of the multilayer packaging material relative to a creaser unit; and by the creaser unit, providing in the multilayer packaging material at least one crease line extending in the first direction and aligned with the at least one cut-out and.

The method may further comprise: detecting the at least one cut-out by at least one sensor, to set, adjust, and/or confirm the position of the multilayer packaging material relative to a cutting unit; and by the cutting unit, cutting the multilayer packaging material in the second direction at the at least one cut-out to form a blank corresponding to the repeat unit.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which:
Fig. 1a is a top view of a web of a multilayer packaging material comprising a plurality of repeat units;
Fig. 1b is an enlarged view of triangle-shaped holes and a cut-out in the multilayer packaging material of Fig. 1a;
Fig. 2 is a cross-sectional side view of the multilayer packaging material;
Figs. 3a-g illustrate variants of the cut-out;
Fig. 4a is a flow chart of a method for production of a web;
Fig. 4b is a flow chart of a method of using a web;
Fig. 5a schematically illustrates a die-cutting machine;
Fig. 5b schematically illustrates a creaser unit and a cutting unit ; and
Fig. 6 is a top view of a blank corresponding to one of the repeat units in Fig. 1a.

### Detailed Description

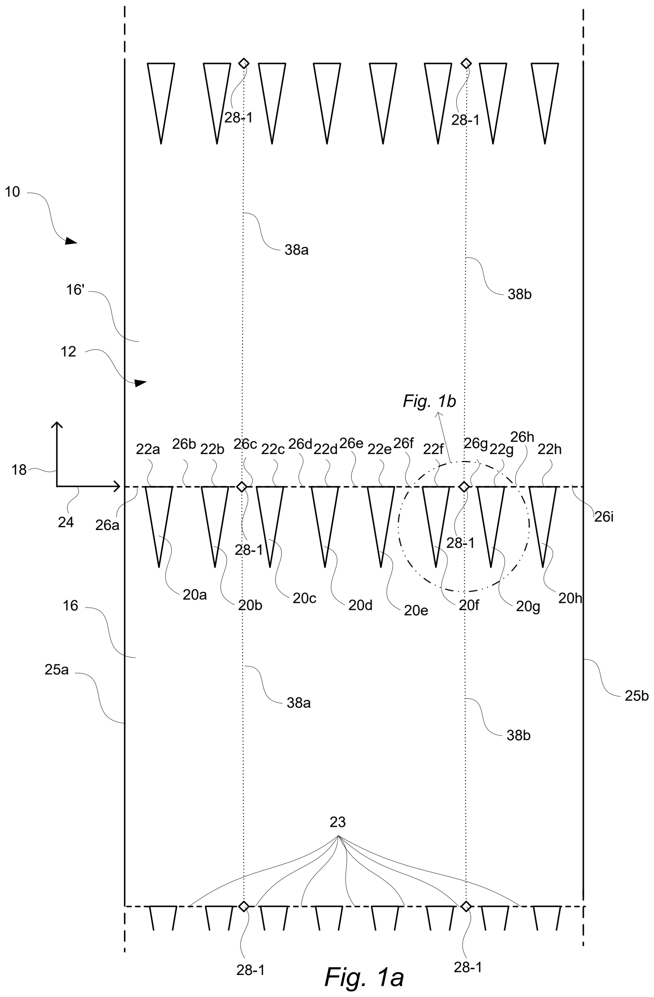

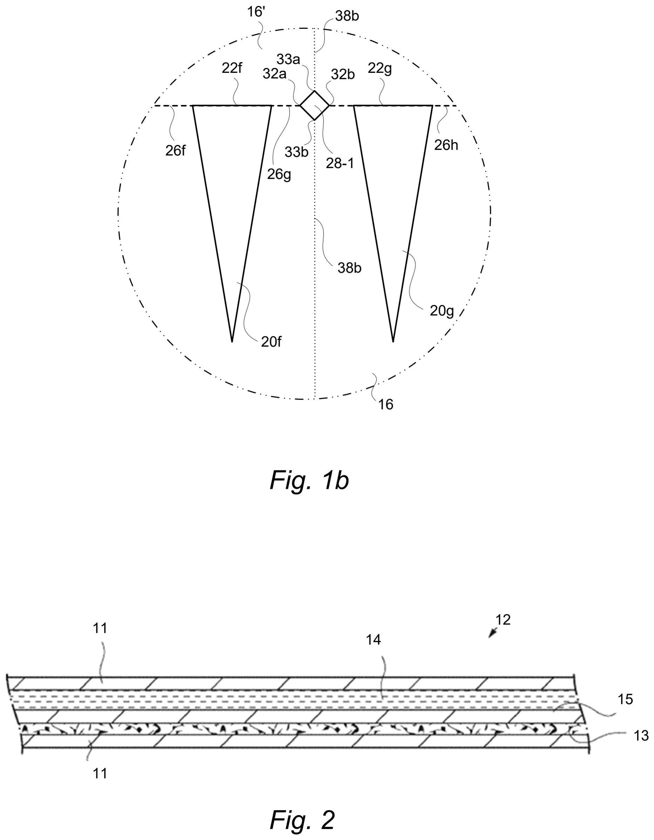

With reference to Fig. 1a, a web 10 of a multilayer packaging material 12 that comprises a layer of fibrous material 14 is illustrated.

As illustrated in Fig. 2, the multilayer packaging material 12 may comprise: the layer of fibrous material 14, such as e.g. paper or cardboard, and at least two layers of heat-seal plastic material 11, e.g. polyethylene, interposing the layer of fibrous material 14 in between one another. Moreover, the multilayer packaging material 12 may also comprise a layer of gas- and light-barrier material 13, e.g. aluminum foil or ethylene vinyl alcohol (EVOH) film, in particular being arranged between one of the layers of heat-seal plastic material 11 and the layer of fibrous material 14. Preferentially, the multilayer packaging material 12 may also comprise a further layer of heat-seal plastic material 15 being interposed between the layer of gas- and light-barrier material 13 and the layer of fibrous material 14.

Returning to Fig. 1a, the web 10 comprises a plurality of repeat units 16, 16' successively arranged and continuously connected to each other in a first direction 18. The first direction 18 may be parallel to (intended) side edges 25a-b of the web 10. Although the web 10 in Fig. 1a is in a flat state, the web 10 will typically be wound/stored on a roll (not shown). The web 10 may comprise a large number of repeat units 16, 16', in the magnitude of many hundreds or thousands.

Each of the repeat units 16, 16' comprises a plurality of holes, preferably triangle-shaped holes 20a-h, through the multilayer packaging material 12. Each of the triangle-shaped holes 20a-h has a base 22a-h. The base 22a-h may be straight. The other two sides or edges of the triangle-shaped holes 20a-h may be of equal length, resulting in isosceles triangle-shaped holes 20a-h. Moreover, the other two sides or edges may be slightly curved, resulting in at least partly curvilinear triangle-shaped holes 20a-h.

The triangle-shaped holes 20a-h are arranged such that the bases 22a-h are mutually aligned and extend along a common geometrical line 23, the line 23 extending (substantially) in a second direction 24 perpendicular to the first direction 18. That is, the line 23 is formed by the alignment of the bases 22a-h of the holes 20a-h in the repeat unit 16. This line 23 comprises line segments 26b-h. That is, the line 23 is not continuous but is made up of individual parts = the line segments 26b-h. The line segments 26b-h extend between a respective pair of the bases 22a-h to delimit the repeat unit 16 from a successive repeat unit 16'. That is, each line segment 26b-h connects a respective pair of bases (e.g., base 22a and 22b, base 22b and 22c, etc.) of the holes 20a-h within the repeat unit 16, and these line segments 26b-h act as boundaries or markers that separate one repeat unit 16 from the next successive repeat unit 16' in the web 10. Essentially, the presence of the line segments 26b-h helps define where one repeat unit 16 ends and the next repeat unit 16' begins.

In other words, the alignment of the hole bases 22a-h creates a visual or structural line 23 in the multilayer packaging material 12. This line 23 is segmented, with each segment 26b-h defined by the straight connections between consecutive pairs of hole bases 22a-h. These segments 26b-h serve to distinguish one repeat unit 16 from the next repeat unit 16', thereby organizing the pattern or structure of the web 10.

The line 23 may be straight. The line segments 26b-h may (also) be straight. The line segments 26b-h may extend in the second direction 24. The number of triangle-shaped holes 20a-h of each repeat unit 16, 16' may for example be eight, as in Fig. 1a, resulting in seven line segments 26b-h. Alternatively, the number of triangle-shaped holes 20a-h of each repeat unit 16, 16' could be fewer, such as seven, six or five, or the number could be more than eight. The plurality of triangle-shaped holes 20a-h may be uniformly distributed in the second direction 24, between the (intended) side edges 25a-b of the web 10.

For each repeat unit 16, the web 10 has at least one cut-out 28-1 through the multilayer packaging material 12, wherein each of the at least one cut-out 28-1 is provided at a respective line segment 26c, 26g of the aforementioned line segments 26b-h, which line segment 26c, 26g delimits the repeat unit 16 from the successive repeat unit 16'. The web 10 may for example have (not more than) one, two, or three cut-outs 28-1 per repeat unit 16. In Fig. 1a, for each repeat unit 16, the web 10 has a first cut-out 28-1 provided at (the second) line segment 26c and a second cut-out 28-1 provided at (the sixth) line segment 26g.

The cut-outs of the present disclosure may have various positions in the first and second directions 18, 24 at the line segments, as well as various shapes.

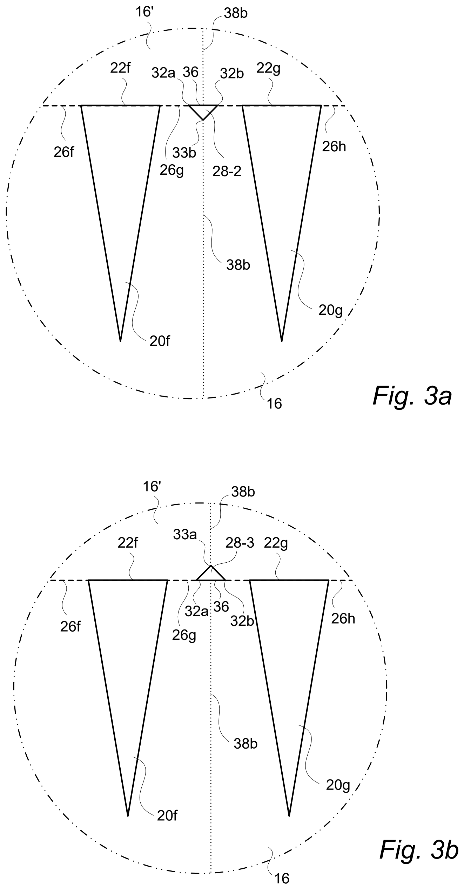

For example, each cut-out 28-1 may be centered with respect to the respective line segment 26c, 26g in the second direction 24, as in Figs. 1a-b (and also in Figs 3a-g). The cut-outs 28-1 centered in that way may generally be aligned in the second direction 24 with intended crease lines 38a-b extending in the first direction 18. The intended crease lines 38a-b may also be referred to as crease line positions. The at least one cut-out 28-1 for one of the repeat units 16 may be aligned with the at least one cut-out 28-1 for the other repeat units 16' of the web 10 in the second direction 24. For example, in Fig. 1a, the left cut-out 28-1 at line segment 26c near the triangle-shaped holes 20b-c of the repeat unit 16 is aligned in the second direction 24 with the left-cut out 28-1 at the corresponding line segment near the corresponding triangle-shaped holes of the successive repeat unit 16'. Likewise, the right cut-out 28-1 at line segment 26g near the triangle-shaped holes 20f-g of the repeat unit 16 is aligned in the second direction 24 with the right cut out 28-1 at the corresponding line segment near the corresponding triangle-shaped holes of the successive repeat unit 16'. The (maximum) width of each cut-out such as cut-out 28-1 in the second direction 24 may, for example, be in the range of 20-80% of the length of the respective line segment 26c, 26g.

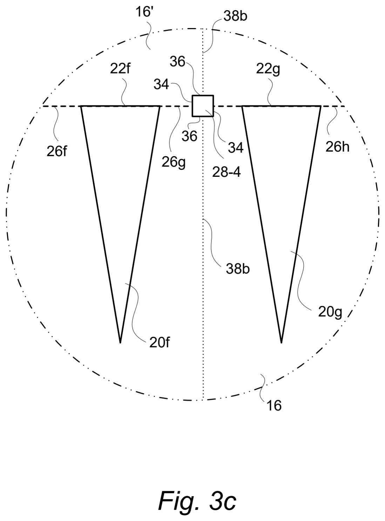

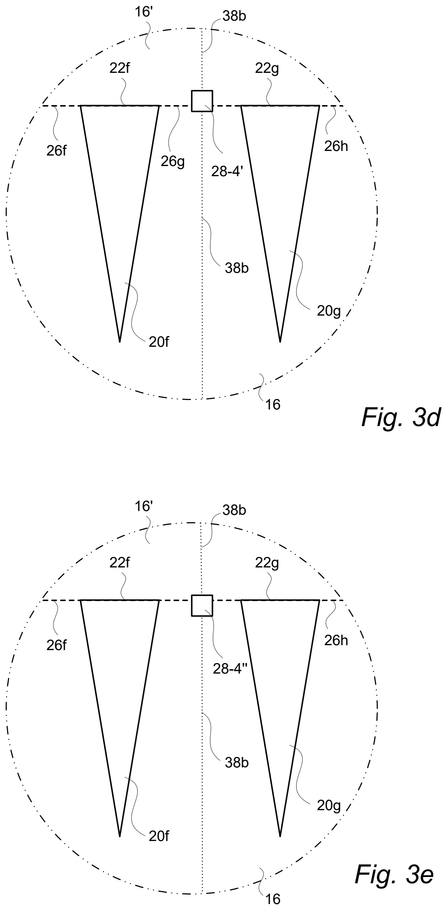

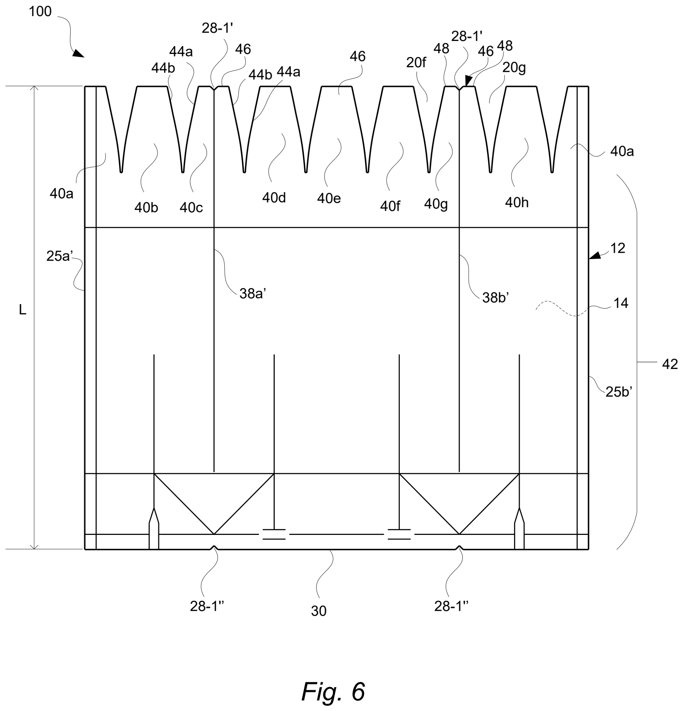

Moreover, each cut-out 28-1 may be provided on the respective line segment 26c, 26g, such that the cut-out 28-1 is positioned in both the repeat unit 16 and the successive repeat unit 16'. That is, a portion of the cut-out 28-1 is positioned in the repeat unit 16 and the rest of the cut-out 28-1 is positioned in the successive repeat unit 16', as in Figs. 1a-b (and also in Figs. 3c-e). In this way, cut-outs 28-1' and 28-1" each e.g. corresponding to approximately half of a cut-out 28-1 may be placed in both the top and the bottom of a blank 100 corresponding to a repeat unit 16 of the web 10, as illustrated in Fig. 6. Each cut-out 28-1 may for example be centered with respect to the respective line segment 26c, 26g in the first direction 18, as in Figs. 1a-b (and also in Fig. 3c). That is, half of the cut-out 28-1 is positioned in the repeat unit 16 and the other half is positioned in the successive repeat unit 16'. Alternatively, each cut-out may be offset with respect to the respective line segment 26c, 26g in the first direction 18, as will be explained with reference to Figs. 3d-e.

Turning to various shapes, each cut-out may for example be a diamond-shaped cut-out 28-1, as in Figs. 1a-b. The diamond-shape(d) may also be referred to as a rhombus, which may have right angles. Each diamond-shaped cut-out 28-1 may have opposite corners 32a-b positioned on the respective line segment 26c, 26g. These corners 32a-b may eventually align with a transversal cut of the web 10 to form the aforementioned bank 100. The other opposite corners 33a-b of the diamond shaped cut-out 28-1 may be positioned on the respective intended crease line 38a-b. These corners 33a-b may eventually align with an actual crease line 38a', 38b' in the multilayer packaging material 14 of the aforementioned bank 100.

In Figs. 3a-b, each cut-out of the web 10 is a triangular-shaped cut-out 28-2, 28-3. Each triangular-shaped cut-out 28-2, 28-3 may have corners 32a-b positioned on the respective line segment 26g. Each triangular-shaped cut-out 28-2, 28-3 may have a straight side 36 extending between the corners 32a-b in the second direction 24. Each triangular-shaped cut-out 28-2, 28-3 may have a third corner 33b and 33a, respectively, positioned on an intended crease line 38b. In Fig. 3a, the triangular-shaped cut-out 28-2 borders the respective line segment 26g with the straight side 36, such that the cut-out 28-2 is positioned exclusively in the repeat unit 16 and not in the successive repeat unit 16'. In this way, the cut-out(s) 28-2 will be placed only in the top of a blank corresponding to a repeat unit of the web 10, cf. Fig. 6. In Fig. 3b, the triangular-shaped cut-out 28-3 borders the respective line segment 26g with the straight side 36, such that the cut-out 28-3 is positioned exclusively in the successive repeat unit 16' and not in repeat unit 16. In this way, the cut-out(s) 28-2 will be placed only in the bottom of a blank corresponding to a repeat unit of the web 10, cf. Fig. 6.

In Figs. 3c-e, each cut-out of the web 10 is a square-shaped cut-out 28-4, 28-4', 28-4". Each square-shaped cut-out 28-4, 28-4', 28-4" may have opposite straight sides 34 extending in the first direction 18. Each square-shaped cut-out 28-4, 28-4', 28-4" may (also) have opposite straight sides 36 extending in the second direction 24. In Fig. 3a, the square-shaped cut-out 28-4 is provided centered on the respective line segment 26g in the first direction 18, such that the cut-out 28-4 is positioned in both the repeat unit 16 and the successive repeat unit 16', similar to Figs. 1a-b. In Fig. 3d, the square-shaped cut-out 28-4' is offset with respect to the line segment 26g in the first direction 18 towards the successive repeat unit 16', such that a majority of the cut-out 28-4' is positioned in the successive repeat unit 16'. In this way, a smaller cut-out will be placed in the top a blank corresponding to a repeat unit of the web 10 and a larger cut-out will be placed in the bottom of the blank, cf. Fig. 6. In Fig. 3e, the square-shaped cut-out 28-4" is offset with respect to the line segment 26g in the first direction 18 towards the repeat unit 16, such that a majority of the cut-out 28-4' is positioned in repeat unit 16'. In this way, a larger cut-out will be placed in the top a blank corresponding to a repeat unit of the web 10 and a smaller cut-out will be placed in the bottom of the blank, cf. Fig. 6. The "majority" mentioned in relation to Figs. 3d-e may for example more than 60% of the cut-out.

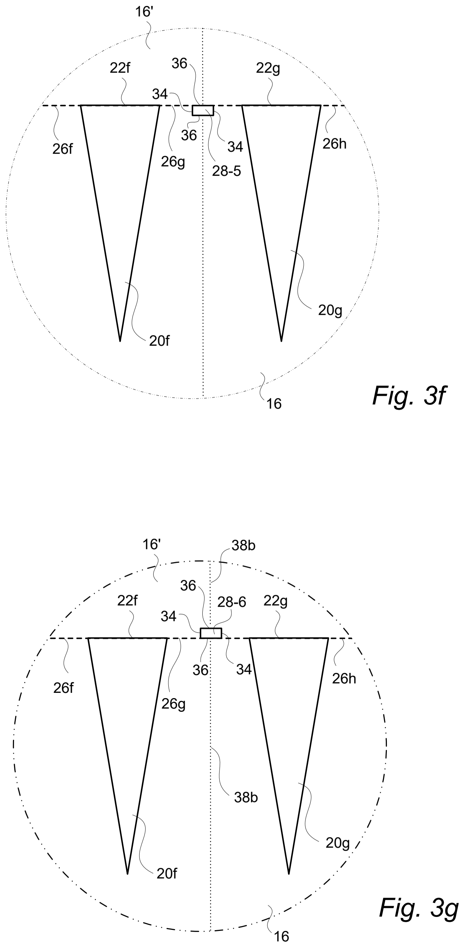

In Figs. 3f-g, each cut-out of the web 10 may be a rectangular-shaped cut-out 28-5, 28-6. Each rectangular-shaped cut-out 28-5, 28-6 may have opposite straight (short) sides 34 extending in the first direction 18. Each rectangular-shaped cut-out 28-5, 28-6 may (also) have opposite straight (long) sides 36 extending in the second direction 24. In Fig. 3f, the rectangular-shaped cut-out 28-5 borders the respective line segment 26g with one of the straight sides 36, such that the cut-out 28-5 is positioned exclusively in the repeat unit 16 and not in the successive repeat unit 16', similar to Fig. 3a. In Fig. 3g, the rectangular-shaped cut-out 28-6 borders the respective line segment 26g with the opposite straight side 36, such that the cut-out 28-5 is positioned exclusively in the successive repeat unit 16' and not in repeat unit 16, similar to Fig. 3b.

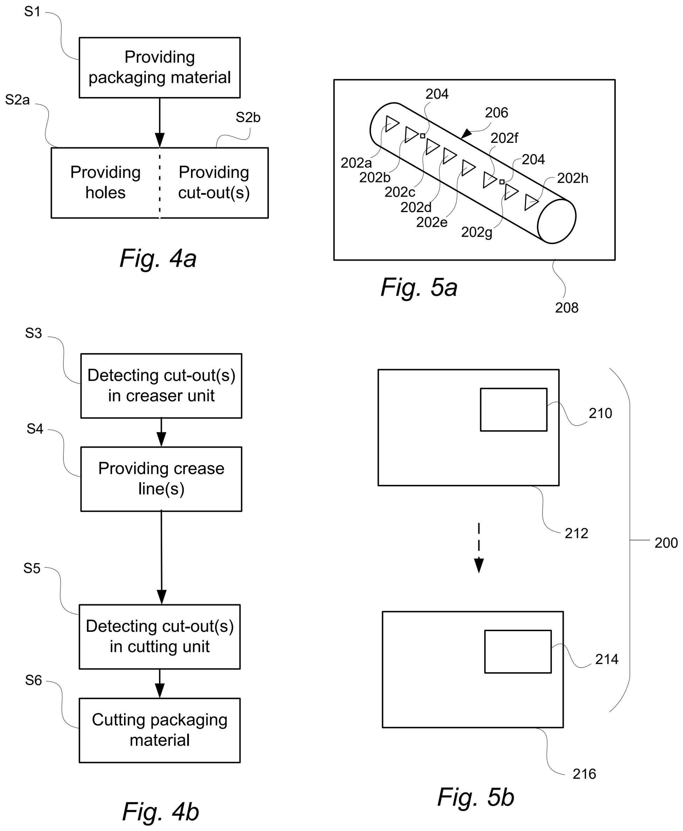

Turning to Fig. 4a, Fig. 4a is a flow chart of a method for production of the web 10. The method for production of the web 10 may be perform at least partly using a die-cutting machine 208 illustrated in Fig. 5a.

The method for production of the web 10 may comprise providing S1 the multilayer packaging material 12 that comprises a layer of fibrous material 14.

The method for production of the web 100 further comprises providing S2a the plurality of (triangle-shaped) holes 20a-h of a repeat unit 16 through the multilayer packaging material 12, and in the same operation as providing the plurality of triangle-shaped holes 20a-h, providing S2b the at least one cut-out 28-1, 28-2, 28-3, 28-4, 28-4', 28-4", 28-5, 28-6 through the multilayer packaging material 12. To provide the at least one cut-out 28-1, 28-2, 28-3, 28-4, 28-4', 28-4", 28-5, 28-6 in the same operation as the triangle-shaped holes 20a-h, steps S2a and S3b may be performed (substantially) simultaneously in the die-cutting machine 208, wherein the triangle-shaped holes 20a-h and the at least one cut-out 28-1, 28-2, 28-3, 28-4, 28-4', 28-4", 28-5, 28-6 (e.g. two cut-out 28-1 as in Figs. 1a-b) may be provided using different parts 202a-h, 204 of the same die cutting tool 206 in the machine 208. The different parts may for example be different blades 202a-h, 204 on a cylindrical die 206 in a rotary die cutting machine 208, as in Fig. 5a. It should be noted that the rotary die cutting machine should also have a complementary cylindrical die (not shown).

Turning to Fig. 4b, Fig. 4b is a flow chart of a method of using the web 10, for example the web 10 produced by the method of Fig. 4a. The method of using the web 10 may be performed using a creaser unit 212 and optionally a cutting unit 216, as illustrated in Fig. 5b. The creaser unit 212 and/or the cutting unit 216 may form part of a packaging machine 200.

The method of using the web 10 may comprise detecting S3 the at least one cut-out 28-1, 28-2, 28-3, 28-4, 28-4', 28-4", 28-5, 28-6 by at least one sensor 210 in the creaser unit 212, to (automatically) set, adjust, and/or confirm the position of the multilayer packaging material 12 relative to the creaser unit 212. The at least one sensor 210 may be at least one optical sensor. The method may further comprise providing S4, by the creaser unit 212, at least one crease line 38a', 38b' in the (set, adjusted, and/or confirmed) multilayer packaging material 12, which at least one crease line 38a', 38b' extends in the first direction 18 and is (or at least should be) aligned with the at least one cut-out 28-1, 28-2, 28-3, 28-4, 28-4', 28-4", 28-5, 28-6.

The method of using the web 10 may further comprise detecting S5 the at least one cut-out 28-1, 28-2, 28-3, 28-4, 28-4', 28-4", 28-5, 28-6 by at least one sensor 214 in the cutting unit 216, to (automatically) set, adjust, and/or confirm the position of the multilayer packaging material 12 relative to the cutting unit 216. The at least one sensor 214 may be at least one optical sensor. The method may further comprise (transversally) cutting S6, by the cutting unit 216, the (set, adjusted, and/or confirmed) multilayer packaging material 12 in the second direction 24 at the at least one cut-out 28-1, 28-2, 28-3, 28-4, 28-4', 28-4", 28-5, 28-6 to form a blank 100 corresponding to the repeat unit 16.

An exemplary blank 100 made from the web 10 is illustrated in Fig. 6. The blank 100 is made of the multilayer packaging material 12 that comprises a layer of fibrous material 14. The bank 100 comprises plurality of flap sections 40a-h that extend from a main portion 42 of the blank 100. The flap sections 40a-h are complementary to (and/or formed by) the plurality of (triangle-shaped) holes 20a-h of the repeat unit 16. Each flap section 40a-h has two lateral edges 44a, 44b facing lateral edges 44b, 44a of neighbouring flap sections. It is appreciated that the lateral edges 44a, 44b may correspond to the aforementioned "other two sides or edges" of the triangle-shaped holes 20a-h. Each flap section 40a-h also has a top edge 46 distal of the main portion 42. The bank 100 may also have a bottom edge 30 opposite the flap sections 40a-h. The bank 100 may also have two parallel side edges 25a' and 25b' corresponding to the (intended) side edges 25a-b of the web 10. The bank 100 may also have crease lines in the multilayer packaging material 12, including at least two crease lines 38a' and 38b' extending parallel to the side edges 25a' and 25b'. The two crease lines 38a' and 38b' should correspond to the intended crease lines 38a-b. L in Fig. 6 is the (repeat) length of the blank 100.

The blank 100 may further comprise a cut-out provided in a limited portion of the top edge 46 of at least one of the flap sections 40a-h, and/or at least one cut-out provided in the bottom edge 30, which cut-out(s) corresponds to the previously discussed cut-outs 28-1, 28-2, 28-3, 28-4, 28-4', 28-4", 28-5, 28-6. For example, the blank 100 in Fig. 6 made from repeat unit 16 in Fig. 1a has a cut-out 28-1' in the top edge 46 of flap sections 40c and 40g as well as two cut-outs 28-1" in the bottom edge 30, wherein each of the cut-outs 28-1' and 28-1" in Fig. 6 may correspond to approximately half of a cut-out 28-1 in Fig. 1a. Thus, each of the cut-outs 28-1' and 28-1" in the blank 100 in Fig. 6 may be triangular-shaped. It should be noted that for other exemplary cut-outs, such as in Figs. 3a-b and 3g-h, the cut-outs in the blank will (or at least should) directly correspond to the cut-outs in the web.

Any cut-out in the top edge 46 may be flanked by straight top edge portions 48. Moreover, the cut-outs in the blank 100, in particular any corners 33a-b of the cut-outs, should be aligned with the crease lines 38a' and 38b'. It should be noted that if the cut-outs 28-1' are not aligned with the crease lines 38a' and 38b' in visual inspection of the blank 100 by an operator, the crease lines 38a' and 38b' may have been placed incorrectly in the creaser unit 212. Moreover, if the corners 32a-b of the cut-outs 28-1' are not in level with the top edges 46 in visual inspection of the blank 100 by an operator, the transversal cut may have been placed incorrectly in the cutting unit 216.

The blank 100 may be turned into a package (for) holding a food product, as disclosed per se in WO2023285258A1 entitled PACKAGE FOR HOLDING A FOOD PRODUCT AND MOULD FOR A PACKAGING MACHINE with applicant TETRA LAVAL HOLDINGS & FINANCE S.A. and filed on 07 July 2022, which is incorporated herein by reference.

From the description above follows that, although various embodiments of the invention have been described and shown, the invention is not restricted thereto, but may also be embodied in other ways within the scope of the subject-matter defined in the following claims.

## Claims

1. A web (10) of a multilayer packaging material (12) that comprises a layer of fibrous material (14), wherein the web (10) comprises a plurality of repeat units (16, 16') successively arranged and continuously connected to each other in a first direction (18),
each of the repeat units (16, 16') comprising a plurality of holes (20a-h) through the multilayer packaging material (12), wherein each of the holes (20a-h) has a base (22a-h), the holes (20a-h) being arranged such that the bases (22a-h) are mutually aligned and extend along a common line (23), the line (23) extending substantially in a second direction (24) perpendicular to the first direction (18), the line (23) comprising line segments (26b-h) that extend between a respective pair of the bases (22a-h) to delimit the repeat unit (16) from a successive repeat unit (16'), and wherein,
for each repeat unit (16), the web (10) has at least one cut-out (28-1, 28-2, 28-3, 28-4, 28-4', 28-4", 28-5, 28-6) through the multilayer packaging material (12), said at least one cut-out (28-1, 28-2, 28-3, 28-4, 28-4', 28-4", 28-5, 28-6) being provided at a respective line segment (26c, 26g) of said line segments (26b-h).

2. The web according to claim 1, wherein each cut-out (28-1, 28-4, 28-4', 28-4") is provided on the respective line segment (26c, 26g), such that the cut-out (28-1, 28-4, 28-4', 28-4") is positioned in both the repeat unit (16) and the successive repeat unit (16').

3. The web according to claim 2, wherein the cut-out is centered (28-1, 28-4) or offset (28-4', 28-4") with respect to the line segment (26g) in the first direction (18).

4. The web according to claim 1, wherein each cut-out (28-2, 28-5) borders the respective line segment (26g), such that the cut-out (28-2, 28-5) is positioned exclusively in the repeat unit (16).

5. The web according to claim 1, wherein each cut-out (28-3, 28-6) borders the respective line segment (26g), such that the cut-out (28-3, 28-6) is positioned exclusively in the successive repeat unit (16').

6. The web according to any preceding claim, wherein each cut-out (28-1, 28-2, 28-3, 28-4, 28-4', 28-4", 28-5, 28-6) is centered with respect to the respective line segment (26c, 26g) in the second direction (24).

7. The web according to any preceding claim, wherein the at least one cut-out (28-1) for one (16) of the repeat units is aligned with the at least one cut-out (28-1) for the other repeat units (16') of the web (10) in the second direction (24).

8. The web according to any preceding claim, wherein each cut-out (28-1, 28-2, 28-3, 28-5, 28-6) has at least one corner (32a-b) positioned on the respective line segment (26c, 26g).

9. The web according to any preceding claim, wherein each cut-out has at least one of: at least one straight side (34) extending in the first direction (18), and at least one straight side (36) extending in the second direction (24).

10. The web according to any preceding claim, wherein each cut-out is diamond-shaped (28-1), triangular-shaped (28-2, 28-3), square-shaped (28-4, 28-4', 28-4"), or rectangular-shaped (28-5, 28-6).

11. A blank (100) made from the web (10) according to any preceding claim, wherein the blank corresponds to one (16) of the repeat units of the web (10).

12. A method for production of a web (10) according to any claim 1 to 10, wherein the method comprises:
providing (S1) a multilayer packaging material (12) that comprises a layer of fibrous material (14);
providing (S2a) the plurality of holes (20a-h) of a repeat unit (16) through the multilayer packaging material (12); and
in the same operation as providing the plurality of holes (20a-h), providing (S2b) the at least one cut-out (28-1, 28-2, 28-3, 28-4, 28-4', 28-4", 28-5, 28-6) through the multilayer packaging material (12).

13. The method according to claim 12, wherein said holes (20a-h) and said at least one cut-out (28-1, 28-2, 28-3, 28-4, 28-4', 28-4", 28-5, 28-6) are provided using different parts (202a-h, 204) of a die cutting tool (206) in a machine (208).

14. A method of using of a web (10) according to any claim 1 to 10, wherein the method comprises:
detecting (S3) the at least one cut-out (28-1, 28-2, 28-3, 28-4, 28-4', 28-4", 28-5, 28-6) by at least one sensor (210), to set, adjust, and/or confirm the position of the multilayer packaging material (12) relative to a creaser unit (212); and
by the creaser unit (212), providing (S4) in the multilayer packaging material (12) at least one crease line (38a', 38b') extending in the first direction and aligned with the at least one cut-out (28-1, 28-2, 28-3, 28-4, 28-4', 28-4", 28-5, 28-6).

15. The method according to claim 14, further comprising:
detecting (S5) the at least one cut-out (28-1, 28-2, 28-3, 28-4, 28-4', 28-4", 28-5, 28-6) by at least one sensor (214), to set, adjust, and/or confirm the position of the multilayer packaging material (12) relative to a cutting unit (216); and
by the cutting unit (216), cutting (S6) the multilayer packaging material (12) in the second direction (24) at the at least one cut-out (28-1, 28-2, 28-3, 28-4, 28-4', 28-4", 28-5, 28-6) to form a blank (100) corresponding to the repeat unit (16).
